# FASCICULE DE BREVET EUROPEEN

(11) **EP 1 642 279 B1**
(45) Date de publication et mention de la délivrance du brevet: **12.11.2008**
(21) Numéro de dépôt: 04767521.0
(22) Date de dépôt: 30.06.2004
(51) Int. Cl.: G11B 9/00

(54) **PROCEDE D'ENREGISTREMENT DE DONNEES ET DISPOSITIF DE MISE EN OEUVRE COMPORTANT UN SUPPORT DE MEMOIRE DEFORMABLE**
VERFAHREN ZUM AUFZEICHNEN VON DATEN UND EINRICHTUNG ZUR AUSFÜHRUNG DES VERFAHRENS MIT DEFORMIERBAREM SPEICHERTRÄGER
METHOD FOR RECORDING DATA AND DEVICE FOR CARRYING OUT THE SAME COMPRISING A DEFORMABLE MEMORY SUPPORT

(30) Priorité: 03.07.2003 FR 0308134
(43) Date de publication de la demande: 05.04.2006
(73) Titulaire: COMMISSARIAT A L'ENERGIE ATOMIQUE, 75752 Paris Cédex 15 (FR)
(72) Inventeur: GIDON, Serge, F-38140 La Murette (FR)
(74) Mandataire: Jouvray, Marie-Andrée
(86) Numéro de dépôt international: PCT/FR2004/001677
(87) Numéro de publication internationale: WO 2005/013270

(56) Documents cités:
- EP-A- 0 887 794
- WO-A-97/44780
- WO-A-02/078005
- US-B1- 6 218 086
- VETTIGER P ET AL: "The Millipede-more than one thousand tips for future AFM data storage" IBM JOURNAL OF RESEARCH AND DEVELOPMENT, IBM CORPORATION, ARMONK, US, vol. 44, no. 3, mai 2000 (2000-05), pages 323-340, XP002194187 ISSN: 0018-8646 cité dans la demande

## Description

### Domaine technique de l'invention

L'invention concerne un procédé d'enregistrement de données au moyen d'un réseau de micropointes, disposé dans un plan face à un support de mémoire, comportant un empilement de couches minces avec au moins une couche mémoire déformable. Ce procédé comporte l'enregistrement de données par actionnement sélectif des micropointes.

L'invention concerne également un dispositif d'enregistrement de données pour la mise en oeuvre du procédé d'enregistrement.

### État de la technique

L'enregistrement de données, aussi bien dans le domaine de l'informatique que dans le domaine des multimédias, doit répondre à un besoin croissant de capacité. Différentes techniques ont été développées, allant du disque dur magnétique au DVD utilisant l'optique et des matériaux à changement de phase. Quelle que soit la technique d'enregistrement utilisée, on cherche toujours à réduire la taille des points mémoires (bits) et l'accroissement de la capacité d'enregistrement passe par une augmentation de la densité de stockage.

Récemment, de très grandes capacités de stockage, de l'ordre du Térabit/cm², ont été obtenues en mettant en oeuvre des micro-pointes du type utilisées dans le domaine de la microscopie à effet de pointe (« The Millipede - More than one thousands tips for future AFM data storage », P. Vettiger et al., IBM J. RES. Develop., vol.44, n° 3, mai 2000, p.323-340 et « Fabrication of microprobe array with sub-100nm nano-heater for nanometric thermal imaging and data storage », Dong-Weon Lee et al., Technical Digest, MEMS 2001, 14th IEEE International Conference on Micro Electro Mechanical Systems (Cat. N°01CH37090), IEEE, Piscataway, NJ, USA, 2001, p.204-207). La haute densité est obtenue par localisation des bits au moyen de micro-pointes dont l'apex est de dimension nanométrique. Les micro-pointes sont, de préférence, disposées en réseau bidimensionnel, avec un accès parallèle aux données, ce qui permet d'atteindre d'excellentes performances en ce qui concerne le débit. Un actionneur unique, qui peut être électromécanique, permet un déplacement relatif monolithique de l'ensemble du réseau de micro-pointes par rapport à la surface du média constituant le support de mémoire. L'écriture est ensuite réalisée de façon thermomécanique.

Dans un tel dispositif d'enregistrement de données, avec effet de pointes, il est nécessaire de garantir un parfait contact de toutes les pointes avec le support de mémoire. Pour des raisons de complexité du système, il n'est pas envisageable de contrôler la position de chaque micro-pointe individuellement. Or, les micro-pointes sont fabriquées de manière collective, par des techniques dérivées de celles de la microélectronique, et il reste toujours une dispersion, due à la fabrication, de la hauteur des micro-pointes. Bien que cette dispersion soit minime, typiquement de l'ordre de 100nm, la plus longue des micro-pointes d'un réseau appuie plus que les autres sur le support de mémoire.

Pour surmonter cette difficulté, chaque micro-pointe est portée en porte-à-faux par une extrémité d'un cantilever, de manière analogue aux réseaux de micro-pointes utilisés en microscopie à sonde locale. La souplesse du cantilever permet alors d'absorber la contrainte d'un appui.

Les documents WO-A-9744780, EP-A-887794 et le brevet US 6218086 décrivent également des dispositifs d'enregistrement dans lesquels chaque micropointe est disposée à l'extrémité d'un cantilever. La simple mise en contact de la micropointe et du support de mémoire provoque un fléchissement du cantilever, permettant de compenser partiellement la dispersion de la hauteur des micropointes. Pour enregistrer une information, une déformation locale du support de mémoire est provoquée soit thermiquement soit mécaniquement.

Cependant, les forces d'appui des micro-pointes sur le support de mémoire ne doivent pas excéder une valeur de l'ordre de 100nN par exemple, de manière à ne pas endommager le support de mémoire. En effet, la surface de contact d'une micro-pointe avec le support de mémoire étant minuscule, la pression est importante. Les cantilevers doivent donc être très souples pour absorber la dispersion de hauteur des micro-pointes. À titre d'exemple, des cantilevers ayant une raideur de l'ordre de 1 N/m, 100µm de longueur, quelques dizaines de micromètres de largeur et quelques micromètres d'épaisseur, ont été développés.

Il est difficile d'envisager des cantilevers plus souples. En effet, leurs dimensions sont difficiles à maîtriser en raison de leur grande longueur vis-à-vis de leur faible largeur et/ou épaisseur. De plus, la précision de positionnement des pointes en regard de la surface du support de mémoire s'en ressentirait, limitant ainsi la densité de la mémoire.

Le document WO-A-02/078005 (voir le préambule des revendications indépendantes) décrit un dispositif capable de lire et d'écrire des données sur un support de mémoire par contact électrique de micropointes avec une couche de protection sans endommager les pointes et/ou le support. Des éléments disposés entre les micropointes et le substrat de support permettent de corriger la dispersion dans la hauteur des micropointes.

### Objet de l'invention

L'invention a pour but un procédé et un dispositif d'enregistrement de données ne présentant pas les inconvénients ci-dessus et permettant plus particulièrement d'ignorer la dispersion dans la hauteur des micro-pointes.

Selon l'invention, ce but est atteint par un procédé et un dispositif selon les revendications annexées.

Un procédé d'enregistrement selon l'invention est plus particulièrement, caractérisé par le fait que, les micropointes étant fixées directement sur un même substrat de support, le procédé comporte, avant l'actionnement sélectif de micropointes pour l'enregistrement de données, la mise en contact, avec une pression prédéterminée, du réseau de micropointes et du support de mémoire, ladite pression permettant l'absorption, par la couche mémoire déformable, de la dispersion des dimensions des micropointes du réseau de micropointes.

Un dispositif pour la mise en oeuvre du procédé selon l'invention comporte un réseau de micropointes disposé dans un plan face à un support de mémoire, comportant un empilement de couches minces avec au moins une couche mémoire déformable, des moyens d'absorption de la dispersion des dimensions des micropointes du réseau et des moyens d'enregistrement par actionnement sélectif de micropointes. Ce dispositif est caractérisé en ce que la couche mémoire déformable constitue lesdits moyens d'absorption lors de la mise en contact, à ladite pression prédéterminée, du support de mémoire et du réseau de micropointes, les micropointes, de dimension d'apex nanométrique, étant fixées directement sur un même substrat de support.

### Description sommaire des dessins

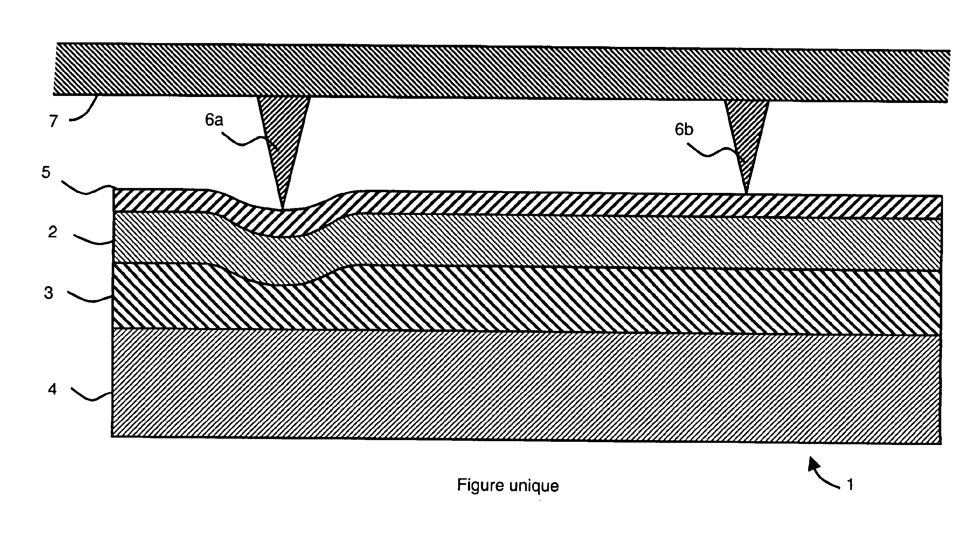

D'autres avantages et caractéristiques ressortiront plus clairement de la description qui va suivre de modes particuliers de réalisation de l'invention donnés à titre d'exemples non limitatifs et représentés au dessin annexé, dans lequel la figure unique illustre schématiquement un mode de réalisation particulier d'un dispositif d'enregistrement de données selon l'invention.

### Description d'un mode particulier de réalisation.

Le réseau de micropointes d'un dispositif d'enregistrement de données selon l'invention comporte une pluralité de micropointes 6 fixées directement, c'est-à-dire sans cantilever, à un même substrat 7. Les micropointes sont donc solidaires du substrat 7, qui est de préférence rigide.

Avant l'actionnement sélectif des micropointes pour l'enregistrement des données, le substrat 7 de support des micropointes 6 est déplacé en direction du support de mémoire 1, de manière à amener simultanément toutes les micropointes 6 en contact, à une pression prédéterminée, avec le support de mémoire 1. Le support de mémoire 1, déformable, est conçu de manière à absorber la dispersion de hauteur de toutes les micro-pointes 6 solidaires d'un même substrat 7 leur servant de support.

Sur la figure, seulement deux micropointes 6a et 6b, solidaires du substrat 7, sont représentées. Leur différence de hauteur est exagérée sur la figure, de manière à illustrer clairement le principe de fonctionnement du dispositif. Ainsi, tandis que la micropointe 6b vient en contact avec le support de mémoire 1 sans le déformer, la micropointe 6a, plus longue, provoque localement une petite déformation du support de mémoire 1. La pression exercée par la micropointe la plus longue est alors insuffisante pour provoquer une déformation représentative d'une donnée à enregistrer.

L'enregistrement de données est réalisé ultérieurement, de manière classique, par actionnement sélectif des micropointes. L'actionnement sélectif des micropointes, destiné à l'enregistrement des données, peut être de type thermique, électrostatique, électrique et/ou mécanique, de manière à former des marques (correspondant par exemple à des changements d'état, des déformations, etc.) à des emplacements mémoire présélectionnés. Dans le cas où l'enregistrement provoque sélectivement, par exemple par pression, une déformation locale de la membrane, la pression exercée doit alors être nettement supérieure à la pression exercée par les micropointes lors de la mise en contact des micropointes du réseau et du support de mémoire.

Les déformations de la couche mémoire déformable 1 permettant d'absorber la dispersion des micropointes lors de la mise en contact du réseau de micropointes et du support de mémoire sont beaucoup moins importantes que les marques éventuellement provoquées, thermiquement, électriquement ou mécaniquement, lors de l'enregistrement des données.

Comme représenté sur la figure, le support de mémoire 1 est, de préférence, constitué par un empilement de couches minces comportant au moins une couche mémoire déformable déposée sur un substrat 4.

La couche mémoire déformable peut être constituée par une couche mémoire souple ou, comme représenté sur la figure, par un empilement d'une couche mémoire 2 et d'une couche souple 3, cette dernière étant déposée sur le substrat 4. Une couche 5, d'interface avec les micro-pointes 6, peut recouvrir la couche mémoire 2. Lors de la mise en contact du réseau de micropointes et du support de mémoire 1, l'appui d'une micro-pointe 6a sur le support de mémoire 1 se traduit alors par une déformation progressive de l'empilement, jusqu'à la couche souple 3. Cette déformation progressive est fonction de la dureté et de l'épaisseur des différentes couches. La constitution et l'épaisseur des différentes couches de l'empilement sont adaptées aux fonctionnalités recherchées et, en particulier, au mode d'enregistrement choisi (thermique, électrique, etc.).

La couche souple 3 peut être constituée par une couche de polymère. À titre d'exemple, elle peut être constituée par de la résine photosensible, notamment de la résine photosensible utilisée en microélectronique dans les procédés de détachement de type "liftoff". Elle peut également être constituée par une colle de dureté contrôlée ou par une couche de silicone élastomère de type PDMS. La couche souple 3 est, de préférence, déposée sur le substrat 4 par dépôt tournette ("spin coating") ou par projection ("spray"). Son épaisseur dépend de la souplesse recherchée et peut, par exemple, être de l'ordre de quelques micromètres ou même moins si nécessaire.

Le substrat 4 peut être en silicium ou en matière plastique, éventuellement souple, par exemple en polyméthacrylate de méthyle (PMMA). Dans ce cas, sa souplesse peut contribuer à la souplesse de l'empilement constituant le support de mémoire 1 et son épaisseur peut être réduite à moins d'un millimètre.

La constitution de la couche mémoire 2 dépend du processus d'enregistrement des données choisi. Cette couche peut notamment être en polymère ou en matériau à changement de phase, isolant ou conducteur. Dans tous les cas, la couche mémoire doit être aussi fine que possible pour conserver la souplesse requise du support de mémoire. Elle a ainsi généralement une épaisseur inférieure au micromètre. Elle peut, par exemple, être déposée par PVD, par exemple par pulvérisation cathodique, par PECVD ou par dépôt tournette sur la couche souple 3.

Si le processus d'écriture choisi est un processus d'écriture électrique, il peut être nécessaire de rendre conductrice la couche souple 3. Ceci peut notamment être réalisé par le choix d'un matériau polymère conducteur, par l'addition d'un additif dans le matériau initialement isolant ou par interposition d'une couche conductrice additionnelle (non représentée) entre la couche mémoire 2 et la couche souple 3. Une telle couche conductrice additionnelle peut, par exemple, être une couche de carbone, de nature adaptée à la conduction, et de faible épaisseur (quelques dizaines de nanomètres).

La constitution de la couche d'interface 5 est destinée à faciliter l'interaction des micro-pointes 6 et du support de mémoire. À titre d'exemple, la couche d'interface 5 peut être en carbone, en polymère, ... Quelle que soit sa nature, elle devra être aussi fine que possible pour ne pas rigidifier le support de mémoire 1.

## Revendications

1. Procédé d'enregistrement de données au moyen d'un réseau de micropointes (6), disposé dans un plan face à un support de mémoire (1), comportant un empilement de couches minces avec au moins une couche mémoire (2) déformable, procédé comportant l'enregistrement de données par actionnement sélectif des micropointes, procédé **caractérisé en ce que** les micropointes étant fixées directement sur un même substrat de support (7), le procédé comporte, avant l'actionnement sélectif de micropointes pour l'enregistrement de données, la mise en contact, avec une pression prédéterminée, insuffisante pour provoquer une déformation représentative d'une donnée à enregistrer, du réseau de micropointes et du support de mémoire, ladite pression permettant l'absorption, par la couche mémoire (2) déformable, de la dispersion de la hauteur des micropointes du réseau de micropointes (6).

2. Procédé selon la revendication 1, **caractérisé en ce que** l'enregistrement des données est de type électrique.

3. Procédé selon la revendication 1, **caractérisé en ce que** l'enregistrement des données est de type thermique.

4. Procédé selon la revendication 1, **caractérisé en ce que** l'enregistrement des données est réalisé par application d'une pression mécanique supérieure à la pression de mise en contact.

5. Dispositif d'enregistrement pour la mise en oeuvre du procédé selon l'une quelconque des revendications 1 à 4, comportant un support de mémoire comportant un empilement de couches minces avec au moins une couche mémoire (2) déformable, un réseau de micropointes disposé dans un plan face au support de mémoire, des moyens d'absorption de la dispersion de la hauteur des micropointes du réseau et des moyens d'enregistrement par actionnement sélectif de micropointes, dispositif **caractérisé en ce que** la couche mémoire déformable constitue lesdits moyens d'absorption lors de la mise en contact, à ladite pression prédéterminée, insuffisante pour provoquer une déformation représentative d'une donnée à enregistrer du support de mémoire et du réseau de micropointes, les micropointes, de dimension d'apex nanométrique, étant fixées directement sur un même substrat de support (7).

6. Dispositif selon la revendication 5, **caractérisé en ce que** la couche mémoire (2) est déposée sur une couche souple (3), déposée sur le substrat (4).

7. Dispositif selon la revendication 6, **caractérisé en ce que** la couche souple (3) est en polymère.

8. Dispositif selon la revendication 7, **caractérisé en ce que** la couche souple (3) est en résine photosensible.

9. Dispositif selon la revendication 6, **caractérisé en ce que** la couche souple (3) est une colle de dureté contrôlée.

10. Dispositif selon la revendication 6, **caractérisé en ce que** la couche souple (3) est en silicone élastomère.

11. Dispositif selon l'une quelconque des revendications 6 à 10, **caractérisé en ce que** la couche souple (3) a une épaisseur de l'ordre de quelques micromètres.

12. Dispositif selon l'une quelconque des revendications 6 à 11, **caractérisé en ce que** la couche souple (3) est conductrice.

13. Dispositif selon l'une quelconque des revendications 6 à 11, **caractérisé en ce qu'**il comporte une couche conductrice additionnelle entre la couche mémoire (2) et la couche souple (3).

14. Dispositif selon l'une quelconque des revendications 5 à 13, **caractérisé en ce que** la couche mémoire (2) a une épaisseur inférieure au micromètre.

15. Dispositif selon l'une quelconque des revendications 5 à 14, **caractérisé en ce qu'**il comporte une couche (5) d'interface avec les micro-pointes (6), recouvrant la couche mémoire (2).

16. Dispositif selon l'une quelconque des revendications 5 à 15, **caractérisé en ce que** le substrat (4) est en silicium.

17. Dispositif selon l'une quelconque des revendications 5 à 16, **caractérisé en ce que** le substrat (4) est en matière plastique, de moins d'un millimètre d'épaisseur.

## Claims

1. Method for recording data by means of an array of micro-tips (6) arranged in a plane facing a memory support (1), comprising a stack of thin layers with at least one deformable memory layer (2), method comprising data recording by selective actuation of the micro-tips, method **characterized in that** the micro-tips being fixed directly onto one and the same support substrate (7), the method comprises bringing, before selective actuation of micro-tips for data recording, the array of micro-tips and the memory support into contact with a predetermined pressure, which is insufficient to cause a deformation representative of a data to be recorded, said pressure enabling the dispersion of the dimensions of the micro-tips of the array of micro-tips (6) to be absorbed by the deformable memory layer (2).

2. Method according to claim 1, **characterized in that** data recording is of electric type.

3. Method according to claim 1, **characterized in that** data recording is of thermal type.

4. Method according to claim 1, **characterized in that** data recording is performed by applying a mechanical pressure greater than the pressure of bringing into contact.

5. Recording device for implementation of the method according to any one of the claims 1 to 4, comprising a memory support, comprising a stack of thin layers with at least one deformable memory layer (2), an array of micro-tips arranged in a plane facing the memory support, means for absorbing the dispersion of the height of the micro-tips of the array and means for recording by selective actuation of the micro-tips, device **characterized in that** the deformable memory layer constitutes said means for absorbing when the memory support and the array of micro-tips are brought into contact, at said predetermined pressure, which is insufficient to cause a deformation representative of a data to be recorded, the micro-tips, having an apex of nanometric dimension, being fixed directly onto one and the same support substrate (7).

6. Device according to claim 5, **characterized in that** the memory layer (2) is deposited on a flexible layer (3) deposited on the substrate (4).

7. Device according to claim 6, **characterized in that** the flexible layer (3) is made of polymer.

8. Device according to claim 7, **characterized in that** the flexible layer (3) is made of photoresist.

9. Device according to claim 6, **characterized in that** the flexible layer (3) is a glue of controlled hardness.

10. Device according to claim 6, **characterized in that** the flexible layer (3) is made of elastomer silicone.

11. Device according to any one of the claims 6 to 10, **characterized in that** the flexible layer (3) has a thickness of about a few micrometers.

12. Device according to any one of the claims 6 to 11, **characterized in that** the flexible layer (3) is conducting.

13. Device according to any one of the claims 6 to 11, **characterized in that** it comprises an additional conducting layer between the memory layer (2) and the flexible layer (3).

14. Device according to any one of the claims 5 to 13, **characterized in that** the memory layer (2) has a thickness of less than one micrometer.

15. Device according to any one of the claims 5 to 14, **characterized in that** it comprises an interface layer (5) with the micro-tips (6), covering the memory layer (2).

16. Device according to any one of the claims 5 to 15, **characterized in that** the substrate (4) is made of silicon.

17. Device according to any one of the claims 5 to 16, **characterized in that** the substrate (4) is made of plastic material with a thickness of less than one millimeter.

## Patentansprüche

1. Verfahren zum Aufzeichnen von Daten mittels eines Netzes aus Mikrospitzen (6), das auf einer Ebene gegenüber einem Speichermedium (1) angeordnet ist und eine Aufschichtung dünner Schichten mit mindestens einer verformbaren Speicherschicht (2) umfasst, Verfahren, das das Aufzeichnen von Daten durch selektives Ansteuern der Mikrospitzen umfasst, Verfahren, das **dadurch gekennzeichnet ist, dass** die Mikrospitzen direkt auf ein und demselben Trägersubstrat (7) befestigt sind und das Verfahren vor dem selektiven Ansteuern der Mikrospitzen zum Aufzeichnen von Daten das Mikrospitzennetz mit dem Speichermedium in Kontakt bringt, und zwar mit einem vorbestimmten Druck, der nicht ausreicht, um eine für eine aufzuzeichnende Information repräsentative Verformung zu erzeugen, welcher Druck durch die verformbare Speicherschicht (2) ein Absorbieren der unterschiedlichen Höhen der Mikrospitzen des Mikrospitzennetzes (6) erlaubt.

2. Verfahren nach Anspruch 1, **dadurch gekennzeichnet, dass** das Aufzeichnen der Daten elektrisch erfolgt.

3. Verfahren nach Anspruch 1, **dadurch gekennzeichnet, dass** das Aufzeichnen der Daten thermisch erfolgt.

4. Verfahren nach Anspruch 1, **dadurch gekennzeichnet, dass** das Aufzeichnen der Daten durch Aufdrücken eines mechanischen Drucks erfolgt, der über dem Kontaktierungsdruck liegt.

5. Aufzeichnungsvorrichtung zur Anwendung des Verfahrens nach einem der Ansprüche 1 bis 4, die ein Speichermedium umfasst, das eine Aufschichtung dünner Schichten mit mindestens einer verformbaren Speicherschicht (2) umfasst, ein Netz aus Mikrospitzen, das auf einer Ebene gegenüber dem Speichermedium angeordnet ist, Mittel zum Absorbieren der unterschiedlichen Höhen der Mikrospitzen des Netzes sowie Mittel zum Aufzeichnen durch selektives Ansteuern der Mikrospitzen umfasst, Vorrichtung, die **dadurch gekennzeichnet ist, dass** die verformbare Speicherschicht die genannten Mittel zum Absorbieren bildet, beim Kontaktieren des Speichermediums und des Mikrospitzennetzes mit dem genannten vorbestimmten Druck, der nicht ausreicht, um eine Verformung zu erzeugen, die repräsentativ für eine aufzuzeichnende Information ist, wobei die Mikrospitzen, deren Apex nanometrische Abmessungen hat, direkt auf ein und demselben Trägersubstrat (7) angeordnet sind.

6. Vorrichtung nach Anspruch 5, **dadurch gekennzeichnet, dass** die Speicherschicht (2) auf eine weiche Schicht (3) aufgebracht ist, die auf das Substrat (4) aufgebracht ist.

7. Vorrichtung nach Anspruch 6, **dadurch gekennzeichnet, dass** die weiche Schicht (3) aus einem Polymer besteht.

8. Vorrichtung nach Anspruch 7, **dadurch gekennzeichnet, dass** die weiche Schicht (3) aus einem Fotoresist besteht.

9. Vorrichtung nach Anspruch 6, **dadurch gekennzeichnet, dass** die weiche Schicht (3) ein Klebstoff mit kontrollierter Härte ist.

10. Vorrichtung nach Anspruch 6, **dadurch gekennzeichnet, dass** die weiche Schicht (3) aus einem Silikonelastomer besteht.

11. Vorrichtung nach einem der Ansprüche 6 bis 10, **dadurch gekennzeichnet, dass** die weiche Schicht (3) eine Dicke in der Größenordnung einiger Mikrometer hat.

12. Vorrichtung nach einem der Ansprüche 6 bis 11, **dadurch gekennzeichnet, dass** die weiche Schicht (3) leitend ist.

13. Vorrichtung nach einem der Ansprüche 6 bis 11, **dadurch gekennzeichnet, dass** sie eine zusätzliche leitende Schicht zwischen der Speicherschicht (2) und der weichen Schicht (3) umfasst.

14. Vorrichtung nach einem der Ansprüche 5 bis 13, **dadurch gekennzeichnet, dass** die Speicherschicht (2) eine Dicke von unter oder gleich einem Mikrometer hat.

15. Vorrichtung nach einem der Ansprüche 5 bis 14, **dadurch gekennzeichnet, dass** sie eine Schicht (5) umfasst, die eine Grenzschicht mit den Mikrospitzen (6) bildet und die Speicherschicht (2) bedeckt.

16. Vorrichtung nach einem der Ansprüche 5 bis 15, **dadurch gekennzeichnet, dass** das Substrat (4) aus Silizium besteht.

17. Vorrichtung nach einem der Ansprüche 5 bis 16, **dadurch gekennzeichnet, dass** das Substrat (4) aus Kunststoff mit weniger als einem Millimeter Dicke besteht.
